# EUROPEAN PATENT APPLICATION

(11) **EP 2 444 126 A1**
(43) Date of publication of application: **25.04.2012**
(21) Application number: 10831062.4
(22) Date of filing: 03.07.2010
(51) Int. Cl.: A62C 37/10

(54) **STARTER FOR AEROSOL FIRE-EXTINGUISHING EQUIPMENT**

(30) Priority: 20.11.2009 CN 200920245405 U
(71) Applicant: Shaanxi J&R Fire Fighting Co., Ltd, Shaanxi 710075 (CN)
(72) Inventor: GUO, Hongbao, Shaanxi 710075 (CN); DENG, Zhenping, Shaanxi 710075 (CN); ZHANG, Weipeng, Shaanxi 710075 (CN)
(74) Representative: Pidgeon, Robert John
(86) International application number: PCT/CN2010/074965
(87) International publication number: WO 2011/060646

(57) **Abstract**

The present invention relates to an initiator for aerosol fire suppression apparatus, comprising piezoelectric initiation power supply unit (1) and ignition head (5). Compared to that in the prior art, the initiator for aerosol fire suppression apparatus in the present invention has outstanding shelf life and anti-interference capability, and are insensitive to environmental temperature, humidity, and electromagnetic interference, with useful time much longer than the useful time of ordinary chemical batteries; in addition, the initiator is flexible to use and easy to install; the elements are simple in structure, compact in size and space saving. The initiator is applicable to various aerosol fire suppression apparatuses.

## Description

### Field of the Invention

The present invention belongs to the technical field of fire suppression apparatuses, and relates to an initiator for aerosol fire suppression apparatus.

### Background of the Invention

In the technical field of fire control, all fire suppression apparatuses involve selection of a safe and efficient initiation approach. In aerosol fire suppression apparatuses, usually a battery is used as the electric ignition head for power supply, i.e., the ignition powder is ignited and thereby the fire suppression apparatus is initiated by switching on the power supply of the battery manually. The principal drawback of such a battery-based electric initiation approach lies in the useful time, since all fire suppression apparatuses are in a "standby" state in most of the time. Usually, it is required that all parts of a fire suppression apparatus must meet the requirement for application after 6-year storage. However, the energy in the battery diminishes as the time goes, and may be not enough to initiate the fire suppression apparatus reliably when the fire suppression apparatus is to be used.

In the prior art of aerosol fire suppression apparatuses, an "Electric Ignition Initiator for Aerosol Fire Suppression Apparatus" is disclosed in Patent Application No. CN2339248Y. The initiator comprises DC inversion booster circuit, high voltage rectifier circuit and energy storage circuit, and electronic delay switch connected in series between an energy storage capacitor and an electric ignition head. However, a drawback of the technical scheme lies in: though the problem related with electric power during initiation is solved partially by means of a capacitive energy storage circuit, with drawbacks, such as complex circuit, many accessories and low reliability. An electronic powder fire extinguisher is disclosed in Patent Application No. CN2239828Y. The electronic dry powder extinguisher employs a piezoelectric ignition system, but the ignition head has to be pulled out and thrown out after ignition. Therefore, the electronic dry powder extinguisher is only applicable to the structural design of throw-type or shot-type dry powder extinguishers. Up to now, no other driving approach for aerosol fire suppression apparatus is reported yet, except for the above-described battery-based driving approach.

### Summary of the Invention

In view of the present situation in the prior art, the object of the present invention is to provide an initiator for aerosol fire suppression apparatus, which is safe, efficient and can be used in long term. The technical solution of the initiator for aerosol fire suppression apparatus will be described as following:

An initiator for aerosol fire suppression apparatus, comprising piezoelectric initiation power supply unit and ignition head.

Furthermore, the piezoelectric initiation power supply unit comprises initiation switch, strike piece and piezoelectric crystal, wherein the input end and output end of the piezoelectric crystal are connected to two wires of the ignition head, and the two wires are free of lap joint.

Furthermore, the ignition head is an ignition head free of bridge wire.

Furthermore, the initiation switch is formed as knob type or key type.

Compared to that in the prior art, an aerosol fire suppression apparatus that utilizes an active initiation approach based on the initiator in the present invention has the following advantages: the initiator is flexible to use and easy to install; the elements are simple in structure and compact in size, and space-saving; the initiator is applicable to various aerosol fire suppression apparatuses; in addition, the initiator has outstanding shelf life and anti-interference capability, and are insensitive to environmental temperature, humidity and electromagnetic interference, with a useful time much longer than the service life of ordinary chemical batteries; moreover, the loss of voltage on the piezoelectric ceramics within 15 years is not more than 15%.

The initiator for aerosol fire suppression apparatus in the present invention can be used to initiate both hot aerosol fire suppression apparatuses and cold aerosol fire suppression apparatuses.

### Brief Description of the Drawings

The initiator for aerosol fire suppression apparatus in the present invention will be further detailed with reference to the accompanying drawings, to make the above-mentioned advantages of the present invention be understood more clearly.

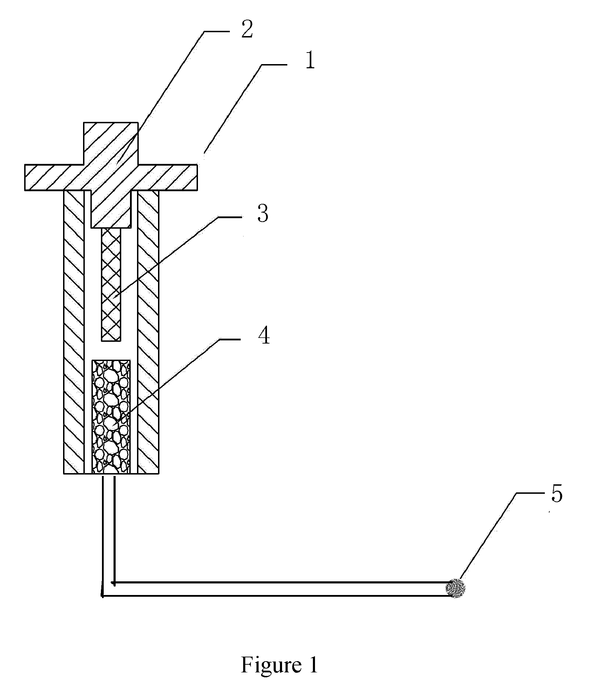

Figure 1 is a schematic structural diagram of the initiator for aerosol fire suppression apparatus in the present invention.

### Detailed Description of the Embodiments

The embodiments of the present invention will be further detailed with reference to the drawings.

Figure 1 is a schematic structural diagram of the initiator for fire suppression apparatus in the present invention. As shown in Figure 1, the apparatus comprises initiation switch 2, strike piece 3, piezoelectric crystal 4 and ignition head 5. In this example, the ignition head 5 is an ignition head free of bridge wire, and the input end and output end of the piezoelectric crystal 4 are connected to two wires of the ignition head 5, and the two wires are free of lap joint.

When the apparatus is used, the operator can press the initiation switch 2 on the piezoelectric initiation power supply unit 1 so that the initiation switch 2 triggers the strike piece 3 to strike the piezoelectric crystal 4. And thereby the ignition head 5 that is free of bridge wire is ignited; in turn, the ignition head 5 ignites the aerosol generating agent. Thus, the aerosol fire suppression apparatus is initiated to suppress the fire.

Of course, the initiation switch may be of knob type. When the operator switch on the apparatus, the initiation switch 2 can be turned so that the initiation switch 2 triggers the strike piece 3 to strike the piezoelectric crystal 4. And thereby the ignition head 5 that is free of bridge wire is initiated; in turn, the ignition head 5 ignites the aerosol generating agent. Thus, the aerosol fire suppression apparatus is initiated to suppress the fire.

On the basis of the above instruction for the present invention, those skilled in the art can easily make modifications or variations to the embodiments without departing from the spirit of the present invention; however, all these modifications or variations shall be deemed as falling into the protective scope of the present invention. Those skilled in the art shall appreciate that the above description is only provided to elaborate and explain the object of the present invention, instead of constituting any confinement to the present invention. The protective scope of the present invention shall only be confined by the claims and their equivalence.

## Claims

1. An initiator for aerosol fire suppression apparatus, **characterized in that** the initiator comprises piezoelectric initiation power supply unit (1) and ignition head (5).

2. The initiator for aerosol fire suppression apparatus according to claim 1, **characterized in that** the piezoelectric initiation power supply unit (1) comprises initiation switch (2), strike piece (3) and piezoelectric crystal (4); the input end and output end of the piezoelectric crystal (4) are connected to two wires of the ignition head (5), and the two wires are free of lap joint.

3. The initiator for fire suppression apparatus according to claim 1, **characterized in that** the ignition head (5) is an ignition head free of bridge wire.

4. The initiator for fire suppression apparatus according to claim 1, **characterized in that** the initiation switch (2) is formed as knob type or key type.
